(19) Europäisches Patentamt
European Patent Office
Office européen des brevets

(11) **EP 3 036 869 B1**

(12) **EUROPEAN PATENT SPECIFICATION**

(45) Date of publication and mention
of the grant of the patent:
**03.07.2019 Bulletin 2019/27**

(51) Int Cl.:
**H04L 12/28** *(2006.01)*    **H04Q 11/04** *(2006.01)*

(21) Application number: **14837649.4**

(22) Date of filing: **22.08.2014**

(86) International application number:
**PCT/US2014/052217**

(87) International publication number:
**WO 2015/027126 (26.02.2015 Gazette 2015/08)**

(54) **RECONFIGURABLE AND VARIABLE-RATE SHARED MULTI-TRANSPONDER ARCHITECTURE FOR FLEXIBLE ETHERNET-BASED OPTICAL NETWORKS**

REKONFIGURIERBARE UND RATENVERÄNDERLICHE GEMEINSAME MULTITRANSPONDERARCHITEKTUR FÜR FLEXIBLE ETHERNET-BASIERTE OPTISCHE NETZWERKE

ARCHITECTURE MULTI-TRANSPONDEUR PARTAGÉE À DÉBIT VARIABLE ET RECONFIGURABLE POUR RÉSEAUX OPTIQUES BASÉS SUR ETHERNET FLEXIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2013   US 201361868785 P**
**21.08.2014   US 201414465122**

(43) Date of publication of application:
**29.06.2016   Bulletin 2016/26**

(73) Proprietor: **NEC Corporation**
**Tokyo 108-8001 (JP)**

(72) Inventors:
• **KANONAKIS, Konstantinos**
**New Brunswick, New Jersey 08901 (US)**
• **HU, Junqiang**
**Davis, California 95616 (US)**

• **PATEL, Ankitkumar**
**Monmouth Junction, New Jersey 08852 (US)**
• **JI, Philip Nan**
**Plainsboro, New Jersey 08536 (US)**
• **WANG, Ting**
**West Windsor, New Jersey 08550 (US)**

(74) Representative: **Betten & Resch**
**Patent- und Rechtsanwälte PartGmbB**
**Maximiliansplatz 14**
**80333 München (DE)**

(56) References cited:
**EP-A1- 2 512 078        WO-A2-01/47173**
**US-A1- 2004 202 205    US-A1- 2007 211 750**
**US-A1- 2009 044 079    US-A1- 2010 158 518**
**US-A1- 2010 158 518    US-A1- 2012 155 486**
**US-A1- 2012 155 486    US-A1- 2013 083 810**

**Description**

**BACKGROUND**

**Technical Field**

The present invention relates to data transport, and more particularly, to data transport using reconfigurable and variable-rate shared flexible Ethernet transponder architecture.

**Description of the Related Art**

While originally designed for use in Local Area Networks (LAN), the Ethernet protocol specified with the IEEE 802,3 Ethernet Working Group has been significantly extended in scope in recent years. The main reason for that is the ubiquity of Ethernet and the resulting economies of scale for the associated interfaces and equipment (e.g. switches). Furthermore, using the same protocol throughout the network facilitates the interconnection with clients, since Ethernet is the dominant technology in the access and aggregation part of the network. As a result, a large number of Metropolitan Area Network (MAN) deployments have already appeared which use either pure Ethernet or Multi-Protocol Label Switching (MPLS) over Ethernet for communication among their nodes, while some service providers could even deploy such networks from their long haul optical packet transport all the way to the aggregation and access segments. Of particular importance are also inter- and intra- data center networks, whereby very large amounts of data are distributed in a bursty manner, making Ethernet a very attractive option due to its packet-based nature.

In order to address the increased overall user traffic requirements, and especially under the prism of the aforementioned developments, the IEEE has been continuously standardizing updates of the Ethernet protocol to support higher rates. The current IEEE 802.3ba standard defines 40 Gb/s and 100 Gb/s rates. In both cases, a multi-lane approach is followed whereby the Ethernet electrical bit-serial signal is split into multiple parallel lower-rate electrical lanes for performing most of the electrical processing, which are then bit-multiplexed into a smaller or equal number of electrical lanes that are fed to an optical transceiver. The latter can also perform further bit multiplexing, depending on the number of physical (PHY) lanes it employs. The next generation of Ethernet beyond 100G is also expected to follow a multi-lane approach (in both electrical and optical domains) mainly due to inherent limitations in state-of-the-art electronic processing capabilities as well as single-carrier optical transmission at such high rates.

A similar method and apparatus are for example disclosed in document US 2012/155486 A1.

Despite the ever increasing flexibility at the line side of optical networks (for example via the use of Orthogonal Frequency Division Multiplexing (OFDM) and Nyquist Wavelength Division Multiplexing (WDM) technologies), the current case is that transponders providing the interconnection with Ethernet clients at the edge of the network would produce fixed rate signals at one of the standardized Ethernet rates. The fact that Ethernet rates are defined in a step-wise fashion (i.e., 10 Gb/s, 40Gb/s, 100Gb/s) makes this inefficiency even worse. Since sufficient traffic aggregation cannot always be ensured, this mismatch is expected to result in spectrum waste at the optical network side.

Furthermore, energy efficiency has become a very crucial requirement in all types of networks, since it has to be ensured that power consumption will scale well with the rapidly increasing amounts of traffic that need to be carried over them. The transponders discussed above will still operate at the full line rate, even when the actual client traffic they handle is lower, thus unnecessarily consuming energy for the electronic circuitry implementing the protocol and the accompanying transceiver modules. Furthermore, for each Ethernet signal that needs to be sent at the edge of the network towards there should be a separate line side port. This implies additional cost and power consumption at disproportionate levels compared to the actual amount of traffic that needs to be transferred.

It is noted that the Software-Defined Networking (SDN) concept, which has emerged in recent years, allows separating the data and the control planes. In the context of a transport network controlled in an SDN manner, the benefits are multifold and include the reduction of manual processes across domains and layers, the possibility for cross-layer optimization schemes, faster connection establishment and teardown, reduction of overprovisioning and simplified management.

As discussed above, there are currently issues with, and there is a need for efficiently deploying Ethernet as a transport technology in high-capacity and flexible optical networks, including rate flexibility, energy efficiency, cost and spectrum utilization, and efficient network control and management; and there is presently no solution which addresses these issues effectively.

**SUMMARY**

A method for data transport. The method for data transport includes receiving one or more signals into a reconfigurable and flexible rate shared rate multi-transponder network architecture, wherein the network architecture includes one or more transponders with multiple line side interfaces and one or more client side interfaces. The one or more transponders are configured to map one or more signals to multiple parallel Virtual Ethernet Links, remove idle characters from the one or more signals, buffer one or more blocks of characters using an intermediate block buffer, activate and deactivate one or more portions of input/output electrical lanes of an Ethernet module, multiplex and demultiplex the one or more signals to and from the input/output electrical lanes to enable sharing of a single optical transceiver by multiple independent signal, and insert blocks of idle characters to enable transmission over a lower rate transmission pipe.

A transmitter. The transmitter includes one or more transponders in a reconfigurable and flexible rate shared rate multi-transponder network architecture, wherein the one or more transponders includes multiple line side interfaces and one or more client side interfaces. The one or more transponders include one or more mappers configured to map one or more signals arriving from each of the one or more client side interfaces to a cofigurable number of Ethernet signals of adjustable rate towards the line side; one or more bit-serial interfaces to receive input, and one or more parallel serial interfaces to send output to electrical lanes; an idle character removal module configured to remove existing idle characters from the Ethernet signals, and to send only useful blocks to active lanes in the electrical lanes; a buffer configured to distribute blocks of data in a round robin fashion, the buffer including an idle block insertion module configured to insert idle blocks when there are no blocks waiting in the buffer; and one or more scramblers or encoders configured to scramble or encode the signals before transmitting the signals.

A receiver. The receiver includes one or more transponders in a reconfigurable and flexible rate shared rate multi-transponder network architecture, wherein the one or more transponders includes multiple line side interfaces and one or more client side interfaces. The one or more transponders further include a receiving module configured to receive signals using active lanes from one or more electrical lanes; one or more demultiplexers configured to demultiplex the signals; one or more descramblers or decoders configured to descramble or decode the signals; and a buffer configured to receive descrambled or decoded signals, the buffer including a character insertion module configured to insert characters between successive Ethernet frames to maintain a transport rate.

These and other features and advantages will become apparent from the following detailed description of illustrative embodiments thereof, which is to be read in connection with the accompanying drawings.

## BRIEF DESCRIPTION OF DRAWINGS

The disclosure will provide details in the following description of preferred embodiments with reference to the following figures wherein:

FIG. 1 is a block/flow diagram of a system and method for data transport using a Flex-Ethernet transponder in accordance with an exemplary embodiment of the present principles;

FIG. 2 is a block/flow diagram of a system and method for transmitting data in accordance with an exemplary embodiment of the present principles;

FIG. 3 is a block/flow diagram of a system and method for receiving data in accordance with an exemplary embodiment of the present principles;

FIG, 4 is a high level block/flow diagram of a system for data transport in accordance with an exemplary embodiment of the present principles, and

FIG. 5 is a flow diagram of a system and method for data transport in accordance with an exemplary embodiment, of the present principles.

## DETAILED DESCRIPTION OF PREFERRED EMBODIMENTS

The system and method according to the present principles may employ a novel Flexible Ethernet (Flex-Ethernet) mechanism which, in one embodiment, may build upon the standardized 802,3ba protocol, and may enable operation at any rate, and also may enable sharing of a single optical transceiver module among Virtual Ethernet Links (VELs) in the optical domain. The system and method may be applied in the context of a novel Ethernet transponder architecture according to the present principles, which may include multiple client side and line side interfaces.

For interoperability purposes, the transponder can operate with clients equipped with standard Ethernet interfaces. The transponder may be centrally controlled in a Software Defined Networking (SDN) manner, so that end-to-end virtual VELs with the desired rates can be established according to the needs of the network operator. The system and method according to the present principles thus may create VELs which can transparently traverse, and may be flexibly switched across au optical network without requiring further electrical processing and switching.

The present principles may enable the sharing of a single optical transceiver module towards the line side by multiple Ethernet signals in parallel, and each of them may be carrying traffic from a different client data stream. Thus, the associated port count, and therefore cost and power consumption, as compared to schemes using typical transponders, is reduced, and this benefit which is even more prominent in the case of long-reach network scenarios. The Flex-Ethernet system and method according to the present principles can also adjust the rate of each constituent Flex-Ethernet signal according to their actual traffic requirements, or according to any other policy, by means of instructions sent to the transponder by a centralized controller.

As a result, optimized spectrum usage may be achieved in the case of end-to-end Ethernet optical networking scenarios, and also to further power consumption reductions. Moreover, the software-defined control may be employed, and may reduce operational cost and complexity, while management complexity is reduced and efficiency is increased compared to the case of forming equivalently sized Ethernet Link Aggregation Groups (LAG). The system and method according to the present principles also does not add additional network layers, and hence no additional overhead is introduced, because the present principles can modify existing Ethernet protocols.

The system and method according to the present principles may transmit typical Ethernet frames over smaller bandwidth transmission pipes of adjustable granularity, thereby enabling the multiplexing of several Ethernet signals over the same line in parallel according to the actual traffic requirements of each of them. The transponder architecture according to the present principles may make use of a multi-lane approach similar to the one used in 802.3ba, and depending on its configuration, it can function either as a set of typical fixed-rate Ethernet transponders or as a set of multiple virtual flexible Ethernet (Flex-Ethernet) ones. Each of the latter virtual transponders may be considered as the one end of a Virtual Ethernet Link (VEL), while the other one may reside at a remote Flex-Ethernet transponder

For example, in one embodiment, Client C may communicate using Ethernet both with Client D and Client B, using different VELs over the same Flex-Ethernet transponder. The transponders according to the present principles may be externally controlled by a remote controller, which may ensure that any two transponders which are interconnected (e.g., via direct point-to-point connections, or through optical devices, such as Reconfigurable Optical Add/Drop Multiplexers (ROADMs) or Optical Cross Connects (OXCs), among a plurality of others), may be configured to transmit/receive the same number of VELs with the appropriate rates assigned to each of them.

It should be understood that embodiments described herein may be entirely hardware or may include both hardware and software elements, which includes but is not limited to firmware, resident software, microcode, etc. In a preferred embodiment, the present invention is implemented in hardware.

Embodiments may include a computer program product accessible from a computer-usable or computer-readable medium providing program code for use by or in connection with a computer or any instruction execution system. A computer-usable or computer readable medium may include any apparatus that stores, communicates, propagates, or transports the program for use by or in connection with the instruction execution system, apparatus, or device. The medium can be magnetic, optical, electronic, electromagnetic, infrared, or semiconductor system (or apparatus or device) or a propagation medium. The medium may include a computer-readable storage medium such as a semiconductor or solid state memory, magnetic tape, a removable computer diskette, a random access memory (RAM), a read-only memory (ROM), a rigid magnetic disk and an optical disk, etc.

A data processing system suitable for storing and/or executing program code may include at least one processor coupled directly or indirectly to memory elements through a system bus. The memory elements can include local memory employed during actual execution of the program code, bulk storage, and cache memories which provide temporary storage of at least some program code to reduce the number of times code is retrieved from bulk storage during execution. Input/output or I/O devices (including but not limited to keyboards, displays, pointing devices, etc.) may be coupled to the system either directly or through intervening I/O controllers.

Network adapters may also be coupled to the system to enable the data processing system to become coupled to other data processing systems or remote printers or storage devices through intervening private or public networks. Modems, cable modem and Ethernet cards are just a few of the currently available types of network adapters.

Referring now to the drawings in which like numerals represent the same or similar elements and initially to FIG, 1, a system and method for data transport using a Flex-Ethernet transponder 100 is illustratively depicted in accordance with one embodiment of the present principles. In one embodiment, at the client side, the transponder 100 may be connected with $c$ clients by means of transceiver modules 111, which may conform to the Ethernet standard, (e.g. C Form-factor Pluggable (CFP) ones), thus enabling the transponder 100 to connect with any client.

Each client interface may operate at a rate of $C_i$ b/s , $i = 1 ... c$. The supported client rates can be either of the standardized 40 Gb/s or 100 Gb/s Ethernet rates, or the rate of a possible future update of the Ethernet protocol following similar principles (e.g., 400 Gb/s and beyond). At the line side, the transponder 100 may have, for example, $l$ interfaces with the associated optical transceiver modules 121, and each may be operating interfaces with the associated optical transceiver modules 121, and each may be operating *at maximum* at a rate $L_i$ b/s, $i = 1 ... l$. The latter transceiver modules can be of an existing type but could also be based on an upcoming physical layer technology (e.g., electrical Orthogonal Frequency Division Multiplexing (OFDM), optical Nyquist Wavelength Division Multiplexing (WDM)). Accordingly, on the client side the interfaces 105, 107 between the PHY module 111 and the Fixed Rate Ethernet Rx 106 and Tx 108 respectively may be standard-compliant (e.g. XLAUI/CAUI), while the equivalent interfaces on the line side may be dependent on the inputs required by a particular transceiver module 121 design. It may be assumed that the aggregate supported client capacity equals the aggregate line capacity, $\sum_{i=1}^{c} C_i = \sum_{i=1}^{l} L_i$.

In one embodiment, a key principle of the present principles is that one or more incoming Ethernet frame streams arriving to the transponder from its client side interfaces and being destined for the same output port $i$ of maximum rate $L_i$ at the line side can be split into up to $k$ independent streams, and each may be carried over a transmission pipe (e.g., VEL) with a rate of, for example, $R_{ij}$, where it may hold that:

$$\sum_{j=1}^{k} R_{i,j} \leq L_i .$$

In each of those instances, each of the transmission pipes (e.g., VELs) may use a dedicated part of the optical transceiver 121 resources for transmission/reception to/from the line side, according to their individual rates. In one embodiment, depending on the exact physical layer technology used for line side transmission, a VEL can be dropped or combined with other VELs transparently (either in the optical or the electrical domain), i.e. without the need for L2 buffering, processing and switching. Moreover, if only part of the maximum transceiver capacity $L_i$ is actually required by the traffic, then (also depending on the flexibility of the transceiver technology used at the line side) it can be operated at the line side at a lower rate, and thus save optical spectrum resources and reduce the transceiver power consumption.

The above may be achieved by, for example, turning off lasers, reducing the transceiver clock rate, or turning off parts of the transceiver digital signal processing (DSP) circuitry, among other methods. Moreover, the number of required transceivers is reduced (which can be an important cost benefit, especially in the case of long reach transmission at the line side), since statistical multiplexing is employed, acknowledging both the time varying nature of traffic between clients, but also the difficulty to foresee future traffic demands during the planning phase. The network operator has the opportunity to use the architecture according to the present principles both as a set of typical transponders, and also may create arbitrary configurations exploiting its flexibility. Finally, the novel Flex-Ethernet transponder according to the present principles may alleviate the above issues that would be incurred if creating the same variable Ethernet virtual links via the use of LAG groups.

In one embodiment, upon the arrival of an Ethernet frame from the receiving (Rx) module 102 of a client side optical transceiver and its reception by a standardized Medium Access Control (MAC)/Physical Reconciliation Sublayer (PCS) module 106 operating at rate $C_i$ (e.g., through interface 105), the frame may be directed to the correct line port by means of a Line Port Mapper module 110. The mapper 110 may process the header of each incoming Ethernet frame and may forward them to one out of $l$ outgoing bit-serial interfaces 113 of rate $L_i$, each leading to a VEL Mapper module 114. Note that it is possible for frames originating from the same client port to be forwarded to different VEL mapper modules 114, as well as for frames originating from different client ports to be forwarded to the same VEL mapper module 114. The VEL mapper modules 114 may further separate arriving frames, and may forward them to one out of $k$ Flex-Ethernet MAC/PCS Transmitting (Tx) Modules 116, 118, may be multiplexed in block 124, and each may be associated with a different VEL.

In one embodiment, the module corresponding to VEL $j$ of line port $i$ may be denoted as "Flex-Ethernet MAC/PCS Tx $(i,j)$". The *maximum* rate of each module 116, 118 may be $L_i$, which may also be the operating rate of the bit-serial interface 113. The decisions taken at modules 110 and 114 may be determined by relevant forwarding tables maintained by the Local Controller 103 and may be updated according to the instructions received by the Remote Controller 101. As an example, matching criteria could be the VLAN ID field, the Destination Address field, or masked versions of them, etc.

In one embodiment, in the opposite direction from the above, an incoming signal of maximum rate $L_i$ may be received from the receiving (Rx) module 130 of a line side optical transceiver 121, and may be demultiplexed in block 126 and forwarded into one or more Flex-Ethernet MAC/PCS Rx modules 120, 122, and each may be operating at rate $R_{ij}$, as it will be described below, The Ethernet frames received from each of those modules may then be directed to a Client Port Mapper Module 112, which may forward them to the correct client port. Note that it is possible for frames originating from the same Flex-Ethernet MAC/PCS Rx 120, 122 to be forwarded, to different client ports, as well as for frames originating from different Flex-Ethernet MAC/PCS Rx 120, 122 to be forwarded to the same client port.

The operating rate of a bit-serial interface 117, 119 may be $L_i$. The client port mapper module 112 may operate similarly to the line port mapper module 110 (discussed above), and may forward frames to, for example, one of the $c$ bit-serial interfaces 115 of rate $C_i$, leading to a standardized Ethernet MAC/PCS Tx 108. The frames may then be sent to the client via a standard-compliant PHY Module Tx 104. It is noted that the above configurations and features are illustratively depicted, other sorts of configurations and features are contemplated, and may be employed according to the present principles.

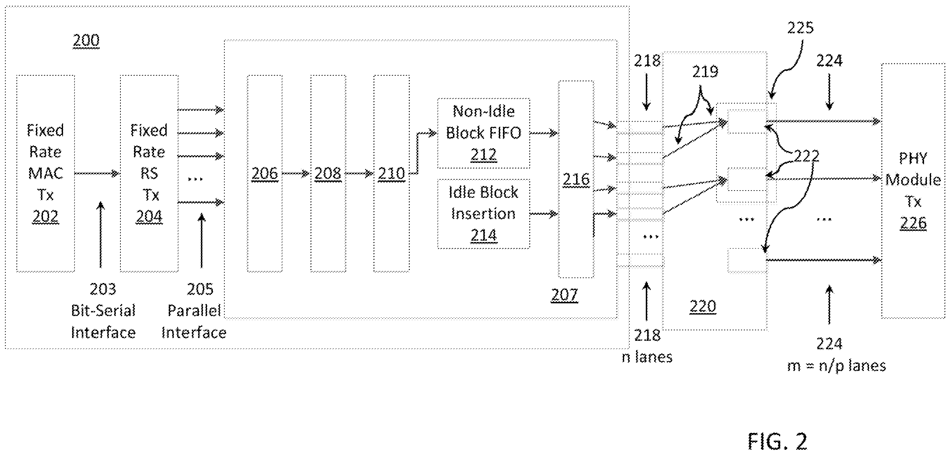

Referring now to FIG. 2, a system and method for transmitting data is illustratively depicted in accordance with an exemplary embodiment of the present principles. In one embodiment, the transmitting part of the Flex-Ethernet MAC/PCS 200 according to the present principles employs, for example, $L_i$ as a standardized Ethernet rate. The frames may be sent from the VEL Mapper 114 to a Flex-Ethernet MAC/PCS Tx module 200, and may be received by a fixed-rate MAC Tx module 202 operating at rate an aggregate rate of $L_i$. They may then be forwarded to an also fixed-rate RS Tx module 204 which may receive as input a bit-serial interface 203 and may output a bit-parallel interface 205, both at an aggregate rate of $L_i$. For example, the latter would be the XLGMII interface for $L_i$ = 40 Gb/s and the CGMII interface for $L_i$ = 100 Gb/s. In case $L_i$ is not a standardized Ethernet rate, then modules 202, 204 and interfaces 203, 205 may be customized to that non-standardized rate, but they may follow exactly the same principles as for standardized rates.

In one embodiment, the Physical Coding Sublayer (PCS) module 207 maintains part of the functionality specified in the 40G/100G Ethernet standard 802.3ba, but it may include a number of modifications. Incoming characters arriving from the parallel interface 205 may be encoded into 66-bit blocks via, for example, 64B/66B encoding in block 208 and then may be scrambled in block 210. However, before encoding and scrambling, all idle characters may be removed in block 206. At this point it should be noted that according to standard 802.3ba the RS may place idle characters only in between successive data frames. The remaining characters, which may now be encoded in block format, may be forwarded to a buffer named Non-Idle Block FIFO 212. This buffer 212 may operate in a FIFO fashion and on the basis of 66-bit blocks. The reason for the intermediate buffering is that a multi-lane scheme may be employed. In that respect, blocks created by the PCS may originally be intended to be distributed to $n$ electrical lanes 218 in a round-robin fashion in block 216, the rate of each lane being $L_i/n$.

In one embodiment, in order to be able to produce an Ethernet signal of rate $R_{i,j} \leq L_i$, the Flex-Ethernet scheme according to the present principles uses round-robin distribution, but only among $\alpha_{i,j}$ lanes which are considered as the "active" lanes. It will hold that $\sum_{j=1}^{k} \alpha_{i,j} \leq n.$ The present principles may take advantage of the existing idle characters, and eliminate them, so that only useful blocks are presented to the $\alpha_{i,j}$ active lanes, wherein useful blocks are blocks which do not include idle characters. At the same time, an additional Idle Block Insertion Module 214 may ensure that whenever there are no blocks waiting in buffer 212, the round-robin distribution mechanism 216 will be fed with "idle blocks" (e.g., blocks comprising idle characters only). This is, for example, is expected to take place when longer inter-frame gaps appear as a result of the actual traffic rate being lower than $R_{i,j}$. It should be noted that the idle blocks inserted in block 214 may be provided in scrambled form.

As mentioned already, each of the Flex-Ethernet MAC/PCS Tx Modules 200 may receive input at a rate of $L_i$ and outputs at rate $R_{i,j} \leq L_i$. It is therefore assumed that traffic destined for each VEL and handled by MAC/PCS Tx $(i,j)$ is already shaped at the client side to ensure that its average rate will not exceed $R_{i,j}$ when averaged at a burst duration longer than a given value $b$. Any shaping mechanism known in the art (e.g.. the token bucket scheme), can be employed to achieve this result. The aforementioned shaping assumption ensures that the maximum required size for buffer 212 to ensure lossless operation is deterministic. In other words, enough idle characters are guaranteed to be received during the buffer duration timeframe to allow correct operation using a lower number of the output PCS lanes 218.

In one embodiment, for the round-robin distribution 216, alignment markers may be used, and depending on the number of active lanes, a smaller lane marker count (ranging from 0 to $\alpha_{i,j}$ - 1) is employed. The same lane marker range can be used by the different Flex-Ethernet PCS modules sharing the same line port, since the Physical Medium Attachment (PMA) 220 may ensure that the respective output lanes 218 of the PCS module 200 may be directed to $m$ separate input lanes 224 of the PHY Module Tx 226. For example, the lanes corresponding to those in block 225 may include data originating only from Flex-Ethernet MAC/PCS Tx (1,1) 200. In one embodiment, the PMA with Lane Multiplexing module 220 may make the appropriate cross-connections between sets of $p$ consecutive input interfaces 219 and the associated single output interfaces 225, each one leading to one out of the $m$ lanes 224 via intermediate $p$: 1 bit multiplexers 222. The multiplexing ratio parameter $p$ may be determined by the respective lane counts as $p = n/m$.

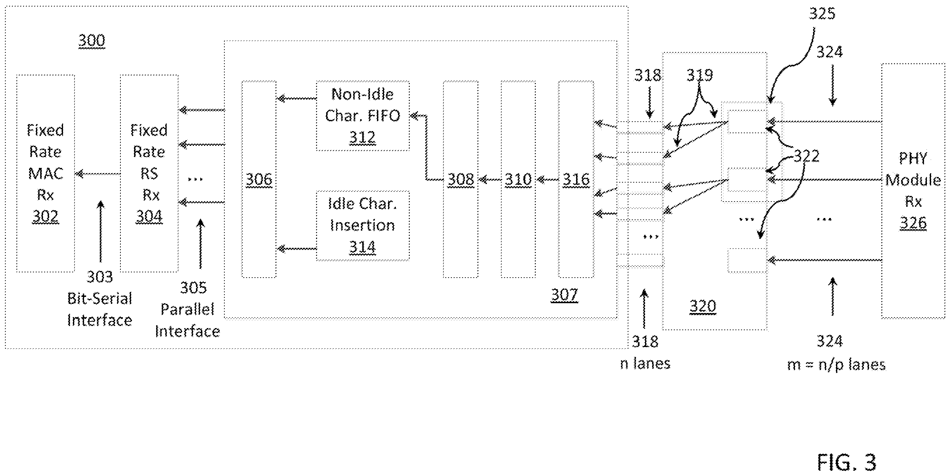

Referring now to FIG. 3, a system and method for receiving data is illustratively depicted in accordance with an exemplary embodiment of the present principles. In one embodiment, the receiving part of the Flex-Ethernet MAC/PCS 300 according to the present principles is associated with a number of active output lanes 325 which is a subset of the n/p lanes 324 of the PHY Module Rx 326, and signals at each lane 325 may be bit-demultiplexed in blocks 322 by the PMA module 320 into $p$ bit streams which are then directed to $\alpha_{i,j}$ output interfaces 319, which in turn may lead to the appropriate active PMA output lanes 318.

In one embodiment, lane reordering and de-skewing 316 may be performed by the PCS 307, but only among the lanes belonging to the same Flex-Ethernet MAC/PCS Rx. Incoming blocks may be descrambled in block 310 and decoded in block 308, and the resulting characters may be inserted in a buffer. Since blocks 302 and 304, and interfaces 303 and 305 may operate at rate $L_i \geq R_{i,j}$, an Idle Character Insertion Module 314 may be employed to insert idle characters for maintaining the rate of $L_i$. "Start" and "terminate" characters may be identified by a Character Combiner Module 306, so that the inserted idle characters are placed only between successive Ethernet frames, as required by the RS.

The resulting bit-serial output of rate $L_i$ may be converted to parallel 305 for providing output to a fixed-rate RS Rx Module 304. This module 304 in turn may output using a bit-serial interface 303 at rate $L_i$ to a fixed-rate MAC Rx module 302, also operating at rate $L_i$. As described above, the corresponding frames may then be forwarded to the client side by means of the Client Port mapper 112 and the corresponding bit-serial interfaces 121, both operating at rate $C_i$. It is noted that although the above configurations have been illustratively depicted, it is contemplated that other sorts of configurations may also be employed according to the present principles.

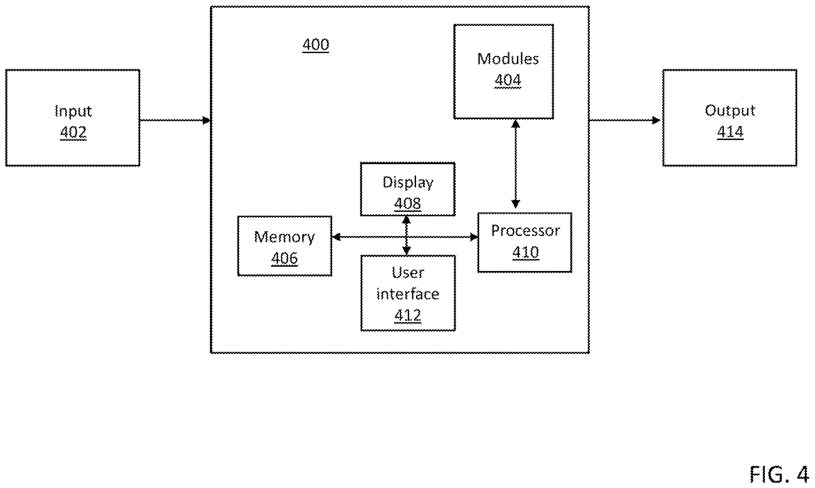

Referring to FIG. 4, a high level block/flow diagram of a system and method for data transport 400 is illustratively depicted in accordance with an exemplary embodiment of the present principles. In one embodiment, the system 400 includes one or more processors 410 and memory 406 for storing applications, modules and other data. The system 400 may include one or more displays 408 for viewing. The displays 408 may permit a user to interact with the system 400 and its components and functions. This may be further facilitated by a user interface 412, which may include a mouse, joystick, or any other peripheral or control to permit user interaction with the system 400 and/or its devices. It should be understood that the components and functions of the system 400 may be integrated into one or more systems or workstations.

The system 400 may receive input data 402 which may be employed as input to a plurality of modules 404 which may be configured to perform a plurality of tasks. The system 400 may produce output data 414, which in one embodiment may be displayed on one or more display devices 408. It should be noted that while the above configuration is illustratively depicted, it is contemplated that other sorts of configurations may also be employed according to the present principles.

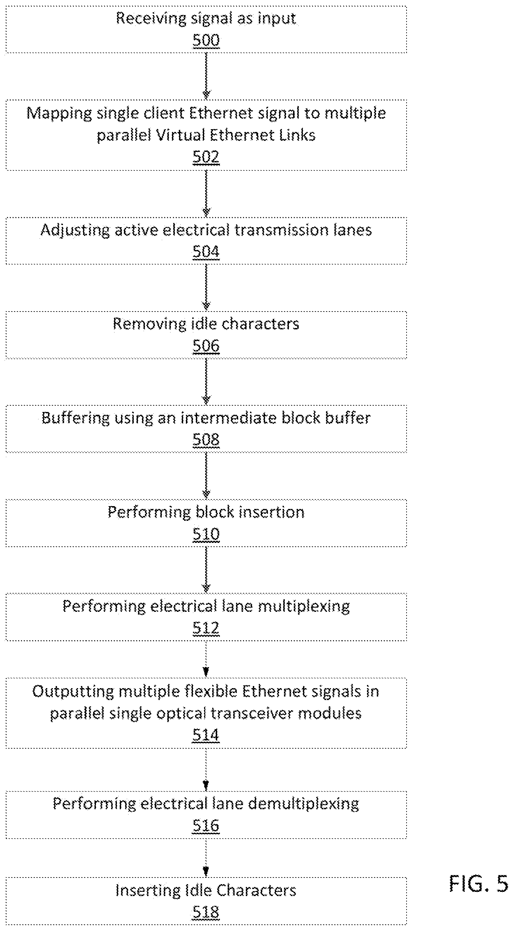

Referring now to FIG. 5, a flow diagram of a system and method for data transport is illustratively depicted in accordance with an exemplary embodiment of the present principles. In one embodiment, one or more signals may be received as input in block 500, and a single client Ethernet signal may be mapped to multiple parallel Virtual Ethernet Links (VELs) in block 502. A number of active electrical transmission lanes may be adjusted in block 504, and idle characters may be removed in block 506. An intermediate block buffer may be employed in block 508, and idle block insertion may be performed in block 510. Electrical lane multiplexing may occur in block 512, multiple flexible Ethernet signals may be output in parallel single optical transceiver modules in block 514, and electrical lane demultiplexing by the receiver may occur in block 516.

In one embodiment, an intermediate character buffer may be employed after block 514, and idle character insertion may occur in block 516. It is noted that the control of the transponder parameters may be by a remote controller and/or a local controller according to the present principles. The system and method according to the present principles may achieve software-defined transmission of multiple flexible Ethernet signals in parallel single optical transceiver modules, thereby achieving increased spectral and energy efficiency while also achieving cost savings and simplified management at the same time. It is noted that in one embodiment, steps 500 through 514 may be performed by a transmitter while steps 516 through 518 may be performed by a receiver.

The foregoing is to be understood as being in every respect illustrative and exemplary, but not restrictive, and the scope of the invention disclosed herein is not to be determined from the Detailed Description, but rather from the claims as interpreted according to the full breadth permitted by the patent laws. Additional information is provided in an appendix to the application entitled, "Additional Information". It is to be understood that the embodiments shown and described herein are only illustrative of the principles of the present invention and that those skilled in the art may implement various modifications without departing from the scope and spirit of the invention. Those skilled in the art could implement various other feature combinations without departing from the scope of the invention. Having thus described aspects of the invention, with the details and particularity required by the patent laws, what is claimed and desired protected by Letters Patent is set forth in the appended claims.

**Appendix to Application:**

PROBLEM/SOLUTION

A1. Describe the problem that the present invention attempts to solve.

While originally designed for use in Local Area Networks (LAN), the Ethernet protocol specified with the IEEE 802.3 Ethernet Working Group has been significantly extended in scope daring the previous years. The main reason for that is the ubiquity of Ethernet and the resulting economies of scale for the associated interfaces and equipment (e.g. switches). Furthermore, using the same protocol throughout the network facilitates the interconnection with clients, since Ethernet is the dominant technology in the access and aggregation part of the network. As a result, a large number of Metropolitan Area Network (MAN) deployments have already appeared which use either pure Ethernet of Multi-Protocol Label Switching (MPLS) over Ethernet for communication among their nodes. Such networks can take the form of several topologies, for example ring or mesh, with optical fibers being the transmission technology for node interconnection. Of particular importance are also inter- and intra- data center networks, whereby very large amounts of data are distributed in a bursty manner, making Ethernet a very attractive option due to its packet-based nature.

At the same time, there has also been intense discussion on further extending the application of Ethernet to even larger-scale networks, i.e. long-haul carrier networks. However, in such network scenarios Operation and Maintenance (OAM) issues are critical. Packet-oriented solutions like Ethernet have traditionally been lagging behind in that area compared to Time Division Multiplexing (TDM) transport technologies like for example Synchronous Digital Hierarchy (SDH) or Optical Transport Network (OTN). In that respect, recent standardization efforts led to the MPLS-TP protocol (IETF RFC 5921) which brings operational concepts from traditional networks to packet-based ones using MPLS. MPLS-TP allows Label Switched Paths (LSP) to be provisioned either statically (via Network Management Subsystems (NMS)) or dynamically (using the Generalized Multi-Protocol Label Switching (GMPLS) protocol), while also being able to perform a number of other functions, such as performance monitoring (PM).

In cases where extended OAM is not required (Like, for instance, in data center networks), pure Ethernet can be directly used for end-to-end packet transport, by using Virtual LAN (VLAN) tunneling to ensure interoperation among multiple client networks. As a result, it is expected that Ethernet network deployments (either purely Ethernet-based or Ethernet-over-MPLS-based) will continue to proliferate and expand, while some service providers could even deploy such networks from their long haul optical packet transport all the way to the aggregation and access segments.

In order to address the increased overall user traffic requirements, and especially under the prism of the aforementioned developments, the IEEE has been continuously standardizing updates of the Ethernet protocol to support higher rates. The current 802.3ba [1] standard defines 40 Gb/s and 100 Gb/s rates. In both cases, a multi-lane approach is followed whereby the Ethernet electrical bit-serial signal is split into multiple parallel lower-rate electrical lanes (of either 5 Gb/s or 10 Gb/s) for performing most of the electrical processing, which are then bit-multiplexed into a smaller or equal number of electrical lanes that are fed to an optical transceiver. The latter can also perform further bit multiplexing, depending on the number of physical (PHY) lanes it employs (the number of PHY lanes varies based on the transceiver rate and reach). The optional use of Forward Error Correction (FEC) has also been included in the standard to enable reach extension. Recently, discussions within IEEE have begun in order to shape the next generation of Ethernet beyond 100G, which is also expected to follow a multi-lane approach (in both electrical and optical domains) mainly due to inherent limitations in state-of-the-art electronic processing capabilities as well as single-carrier optical transmission at such high rates.

It is therefore envisioned that Ethernet will play an increasingly important role in future transport networks of different types and scales. The de facto means of transmission in those networks is optical technology; hence Ethernet optical transponders are required to inject client-side Ethernet traffic into the optical network. Such devices perform the conversion of the Ethernet signal from the electrical domain to a signal appropriately located and sized in the optical spectrum domain. Optical transmission has advanced significantly over the past years, with technologies like Orthogonal Frequency Division Multiplexing (OFDM) and Nyquist Wavelength Division Multiplexing (WDM) proposed to achieve increased spectral efficiency and improved signal transmission quality. Moreover, advanced modulation formats like multi-level Quadrature Amplitude Modulation (QAM) further enhance the offered capacity. Leveraging those techniques, it is possible to form so-called "superchannels" consisting of multiple subcarriers, with variable width and per-subcarrier capacity to fit the need of each traffic demand. The recently approved ITU-T wavelength plan recommendation G.694.I addresses this situation by defining a flexible wavelength grid (Flex-Grid). At the same time, novel optical devices like Wavelength Selective Switches (WSS) enable the construction of the so-called flexible Reconfigurable Optical Add-Drop Multiplexers (ROADMs) and Optical Cross-Connects (OXCs), which make it possible to perform add/drop and switching functionalities on flexible optical signals in the optical domain.

However, despite the unprecedented flexibility at the line side of optical networks, the current case is that transponders providing the interconnection with clients at the edge of the network would produce fixed rate signals at one of the standardized rates. The fact that Ethernet rates are defined in a step-wise fashion (i.e. 10 Gb/s, 40Gb/s, 100Gb/s) makes this inefficiency even worse. Unless sufficient aggregation is performed - which cannot always be ensured - this mismatch is expected to result in spectrum waste at the optical network side.

Furthermore, energy efficiency has become a very crucial requirement in all types of networks, since it has to be ensured that power consumption will scale well with the rapidly increasing amounts of traffic that need to be carried over them. The transponders discussed above will still operate at the full line rate, even when the actual client traffic they handle is lower, thus unnecessarily consuming energy for the electronic circuitry implementing the protocol and the accompanying transceiver modules. Furthermore, for each Ethernet signal that needs to be sent at the edge of the network towards there should be a separate line side port. This implies additional cost and power consumption at disproportionate levels compared to the actual amount of traffic that needs to be transferred.

At the same time, the Software-Defined Networking (SDN) concept which has emerged during the last years [2] allows separating the data and the control planes. In principle, SDN delegates the most complex control layer functionalities to centralized controllers, while allowing the network equipment to remain relatively simple - mainly performing the forwarding of data. Centralized controllers can run several network applications over an abstract, virtualized topology, the latter constructed by communicated with the network equipment. SDN was initially proposed to enable efficient use of campus network resources for experimentation purposes; however its scope has been largely expanded to cover practically all network types and layers. In the context of a transport network controlled in an SDN manner, the benefits would be multifold and include the reduction of manual processes across domains and layers, the possibility for cross-layer optimization schemes, faster connection establishment and teardown, reduction of overprovisioning and simplified management.

Summarizing, the issues that need to be addressed in order to be able to efficiently deploy Ethernet as a transport technology in upcoming high-capacity and flexible optical networks are rate flexibility, energy-efficiency, cost and spectrum utilization as well as efficient network control and management. This invention attempts to solve all the aforementioned problems in Ethernet-based networks of various scales by proposing a software-defined, reconfigurable and variable-rate shared Flexible Ethernet transponder architecture.

A2. How have others attempted to solve the problem described in A1?

A scheme whereby the rate of a single Ethernet signal can be adapted by modifying the number of active lanes has been proposed in [3], [4], [5], however these works only attempted to solve the problem of energy-efficiency. Only standard-compliant transceivers were considered, while rate adaptation schemes were proposed, whereby by means of embedded signaling the two ends of the Ethernet link can identify the number of lanes employed. In the most common case whereby the client (e.g. an IP router) is separate from the optical transponder, such schemes would not be able to operate in metro/core networks with Ethernet serving as the transport scheme, like the ones described in section A1. Moreover, only a single Ethernet signal is considered to be transported over each optical transceiver and link.

In the same direction of energy-efficiency, IEEE has produced the standard 802.3az [6], which defines several schemes that can be used to reduce Ethernet power consumption. These methods include the use of sleep modes and packet coalescing. The main drawback of such schemes is that they inherently affect Quality of Service (QoS) by increasing packet delay due to the latency incurred when switching between "off" and "on" states and the difficulty of predicting traffic fluctuations. It is also noted that under those schemes, while in the "on" state the link operates at the full line rate, independent of the actual traffic.

Other schemes have also been proposed in order to achieve an adaptive link rate according to link utilization for the purposes of energy-efficiency [7], [8]. However, such mechanisms were addressing lower-rate Ethernet versions (up to 10Gb/s) and would only be able to switch between one of the standardized rates, for example between 100 Mb/s, IGb/s and 10Gb/s.

The works in [9], [10], [11] have proposed "slicing" a single optical transceiver among various traffic flows. However, on the one hand their main focus is on the Optical Transport Network (OTN) and on the other they have not specified solutions for achieving such flexible operation. Their main assumption is that this can be achieved using the existing Layer 1 (L1) OTN function of Virtual Concatenation (VCAT). VCAT allows logically merging several Optical Transport Units (OTUs) of the same rate into a single, higher-rate OTU that is not necessarily of a standardized rate. The main drawback of VCAT is the increased management complexity especially for large number of concatenated OTUs, as well as the differential delays incurred when the members of a group follow different paths along the network.

In the Ethernet domain, in a similar manner it is possible to create Link Aggregated Groups (LAGs) with a rate of arbitrary multiples of the standardized Ethernet rates by employing the Link Aggregation Control Protocol (LACP) defined in IEEE 802.lax 0. Several other similar proprietary schemes have also been deployed. The main disadvantage of all such approaches is that they would still require as many line side transceiver modules as the constituent Ethernet signals of the LAG. Moreover, they introduce additional management complexity, especially in the case of larger group sizes (necessary in order to achieve fine granularity). Moreover, it has to be ensured that packets which belong to the same IP/TCP flow and are distributed across the individual links of the group will be received in the same order at the receiver side (an important requirement in order to achieve low application delay). For that reason, hashing at L3/L4 needs to be employed, which has been shown to reduce the LAG utilization and would also require from the transponder to perform higher-layer functionalities.

Finally, one could foresee novel LI schemes operating at flexible rates. However, such schemes would imply significantly increased complexity and overhead; An additional network layer would essentially be introduced, since Ethernet packets should be encapsulated within those L1 transport structures.

A3. How does the invention solve the problem described in A1?

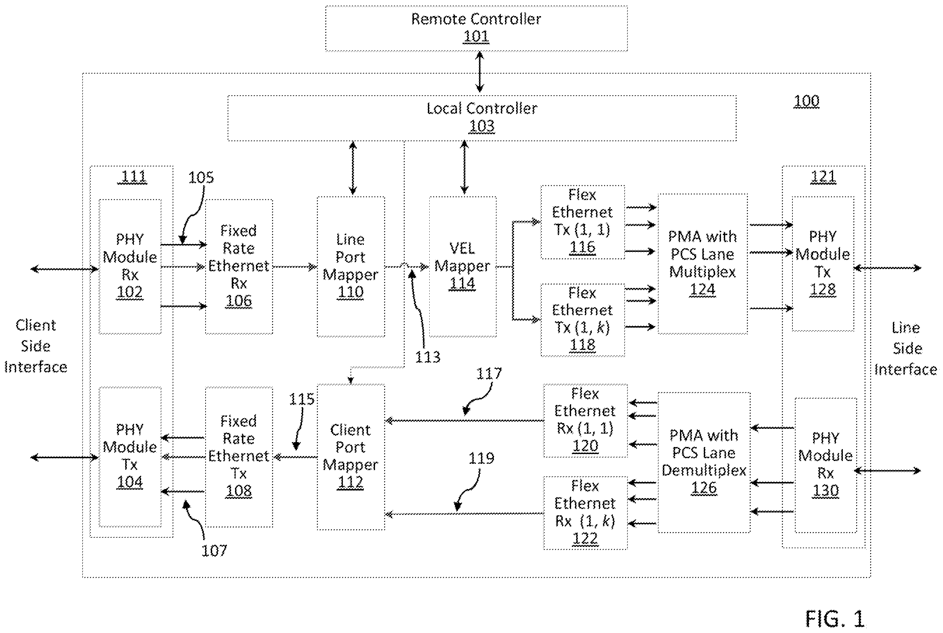

This invention proposes a novel Flexible Ethernet (Flex-Ethernet) mechanism which builds upon the standardized 802.3ba protocol but makes it able to operate at any rate and enables sharing of a single optical transceiver module among Virtual Ethernet Links (VELs) in the optical domain. The scheme is intended to be applied in the context of a novel proposed Ethernet transponder architecture with multiple client side and line side interfaces. For interoperability purposes, the transponder can operate with clients equipped with standard Ethernet interfaces. The transponder is considered to be centrally controlled in an SDN manner, so that end-to-end virtual VELs with the required rates can be established according to the needs of the network operator. The proposed scheme thus allows the creation of VELs which can transparently traverse and even he flexibly switched across the optical network without further electrical processing and switching. A usage example of the proposed transponder in an overall architecture is depicted in Figure 1.

B. What is the specific competitive/commercial value of the solution achieved by the present invention (e.g., less complexity, faster operation, lower cost, higher quality, etc.)?

As mentioned above, the proposed architecture allows the sharing of a single optical transceiver module towards the line side by multiple Ethernet signals in parallel, each of them carrying traffic from a different client data stream. Thus, the associated port count - and therefore cost and power consumption - compared to schemes using typical transponders is reduced, a benefit which is expected to be even more prominent in the case of long-reach network scenarios. The proposed Flex-Ethernet scheme can also adjust the rate of each constituent Flex-Ethernet signal according to their actual traffic requirements, or according to any other policy, by means of instructions sent to the transponder by a centralized controller. As a result, it can lead to optimized spectrum usage in the case of end-to-end Ethernet optical networking scenarios but also to further power consumption reductions. Moreover, the software-defined control employed can reduce operational cost and complexity, while management complexity is reduced and efficiency is increased compared to the ease of forming equivalently sized Ethernet LAG groups via LACP. Finally, the proposed scheme does not add additional network layers and hence no additional overhead is introduced, since it essentially modifies the existing Ethernet protocol concept.

D. DESCRIBE THE INVENTION

1a. - Flow chart or block diagram the key steps/features to show their relationship or sequence.

Please use plain words rather than mathematical expressions, if possible.

The proposed scheme manages to transmit typical Ethernet frames over smaller bandwidth transmission pipes of adjustable granularity, allowing the multiplexing of several Ethernet signals over the same line in parallel according to the actual traffic requirements of each of them. The proposed transponder architecture makes use of a multi-lane approach similar to the one used in 802.3ba [1] and depending on its configuration, it can function either as a set of typical fixed-rate Ethernet transponders or as a set of multiple virtual flexible Ethernet (Flex-Ethernet) ones. Each of the latter virtual transponders is considered as the one end of a Virtual Ethernet Link (VEL), the other one residing at a remote Flex-Ethernet transponder. This is depicted in Figure 1, where for example Client C communicates using Ethernet both with Client D and Client B, using different VELs over the same Flex-Ethernet transponder (200). Dashed line thickness in the figure implies different rates for each VEL. The proposed transponders are externally controlled by a remote controller (100) which ensures that any two transponders which are interconnected (either via direct point-to-point connections or through optical devices - e.g. ROADMs or OXCs, as shown in Figure 1), are configured to transmit/receive the same number of VELs with the appropriate rates assigned to each of them.

Figure 1. Example of an optical network architecture, whereby the proposed Flex-Ethernet transponder is used for creating flexible virtual Ethernet links (VELs) among multiple clients. At each Flex-Ethernet transponder, VELs having the same destination are sent by means of a single optical transceiver and can be potentially added/dropped or switched optically across the optical network.

A block diagram explaining the overall architecture of the proposed Flex-Ethernet transponder (200) is depicted in Figure 2. At the client side, the transponder is connected with $c$ clients by means of transceiver modules (300) conforming to the Ethernet standard, (e.g. CFP ones) thus enabling the transponder to connect with any client. Each client interface operates at a rate of $C_i$ b/s,i = 1 ... c. The supported client rates can be either of the standardized 40 G/bs or 100 Gb/s Ethernet rates, or the rate of a possible future update of the Ethernet protocol following similar principles (for example 400 Gb/s). At the line side, the transponder has $l$ interfaces with the associated optical transceiver modules (800), each operating *at maximum* at a rate $L_i$ b/s,i = 1 ...l. The latter transceiver modules can be of an existing type but could also be based on upcoming physicallayer technology (for example electrical OFDM or optical Nyquist WDM). Accordingly, the interfaces (202), (203) should be standard-compliant (e.g. XLAUI/CAUI), white the interfaces (213), (214) are dependent on the inputs required by the transceiver module (800) design. It is also assumed that the aggregate supported client capacity equals the aggregate line capacity, i.e. $\sum_{i=1}^{c} C_i = \sum_{i=1}^{l} L_i$ .

The key principle of the proposed scheme is that one or multiple incoming Ethernet frame streams arriving to the transponder from its client side interfaces and being destined for the same output port $i$ of rate $L_i$ b/s at the line side can be split into up to $k$ independent streams, each carried over a transmission pipe (VEL) with a rate of $R_{ij}$ b/s, where it should hold that: $\sum_{j=1}^{k} R_{i,j} \leq L_i$ .

At each time, each of those VELs uses a dedicated part of the optical transceiver (800) resources for transmission/reception to/from the line side, according to their individual rates. This implies that, depending on the exact physical layer technology used for line side transmission, a VEL can be dropped or combined with other VELs transparently (either in the optical or the electrical domain), i.e. without the need for L2 buffering, processing and switching. Moreover, if only part of the maximum transceiver capacity $L_i$ is actually required by the traffic, then (also depending on the flexibility of the transceiver technology used at the line side) it can be possible to operate the line side at a lower rate thus saving optical spectrum resources and reducing the transceiver power consumption. This could be achieved for example by turning off lasers, reducing the transceiver clock rate, or turning off of the digital signal processing (DSP) circuitry. Moreover, the number of required transceivers is reduced (which can be an important cost benefit, especially in the case of long reach transmission at the line side), since statistical multiplexing is employed, acknowledging both the time varying nature of traffic between clients, but also the difficulty to foresee future traffic demands during the planning phase. The network operator has the opportunity to use the proposed architecture both as a set of typical transponders but also create arbitrary configurations exploiting its flexibility. Finally, the proposed Flex-Ethernet transponder alleviates the issues that would be incurred if creating the same variable Ethernet virtual links via the use of LAG groups.

As shown in Figure 2, upon the arrival of an Ethernet frame from the receiving CRx) module (301) of a client side optical transceiver (300) and its reception by a standardized Medium Access Control (MAC/Physical Reconciliation Sublayer (PCS) module (204) operating at rate $C_i$ (interface (206) is bit-serial at rate $C_i$), the frame is directed to the correct line port by means of a Line Port Mapper module (208). The mapper (208) processes the header of each incoming Ethernet frame and forwards them to one out of $l$ outgoing bit-serial interfaces (209) of rate $L_{i,}$ each leading to a VEL Mapper module (211). Note that it is possible for frames originating from the same client port to be forwarded to different. VEL Mapper modules. Module (211) further separates arriving frames, forwarding them to one out of $k$ Flex-Ethernet MAC/PCS Transmitting (Tx) Modules (400), each associated with a different VEL. The module corresponding to VEL $j$ of line port $i$ is denoted as "Flex-Ethernet MAC/PCS Tx $(i,j)$" in the figure. The *maximum* rate of each module (400) is $L_i$ b/s, which is also the operating rate of the bit-serial interface (209). The decisions taken at modules (208) and (211) are determined by relevant forwarding tables maintained by the Local Controller (201) and updated according to the instructions received by the Remote Controller (100). As an example, matching criteria could be the VLAN ID field, the Destination Address field, or masked versions of them.

in the opposite direction of Figure 2, the incoming signal of maximum rate $L_i$ from the receiving (Rx) module (802) of a line side optical transceiver (800) is demultiplexed and forwarded into a number of Flex-Ethernet MAC/PCS Rx modules (500), each operating at rate $R_{ij,}$ as it will be described below. The Ethernet frames received from each of those modules are then directed to a Client Port Mapper Module (210) which forwards them to the correct client port. Note that it is possible for frames originating from the same Flex-Ethernet MAC/PCS Rx to be forwarded to different client ports. The operating rate of bit-serial interface (212) is $L_i$ b/s. Module (210) operates similarly to module (208) discussed above and forwards frames to one of the $c$ bit-serial interfaces of rate $C_i$(207), leading to a standardized Ethernet MAC/PCS Tx (205). The frames are then sent to the client via a standard-compliant PHY Module Tx (302).

Figure 2. The proposed Flexible Ethernet Shared Transponder architecture.

Figure 3 shows in more detail the transmitting part of the proposed Flex-Ethernet MAC/PCS (400). If $L_i$ is a standardized Ethernet rate, then as shown in Figure 3, the frames sent from the VEL Mapper (211) to a Flex-Etlicnict MAC/PCS Tx module (400) are received by a fixed-rate MAC Tx module (401.) operating at rate $L_i$. They are then forwarded to an also fixed-rate RS Tx module (403) which receives as input a bit-serial interface (402) and outputs a bit-parallel interface (404), both at $L_i$ b/s. For example, the latter would be the XLGMII interface for $L_i$ = 40 Gb/s and the CGMII interface for $L_i$ = 100 Gb/s, In case $L_i$ is not a standardized Ethernet rate, then modules (401), (403) and interfaces (402), (404) should be customized to that non-standardized rate, hower they should follow exa the same pricipales defined in [1]

Figure 3. The transmitting part of the proposed Flex-Ethernet transponder architecture.

The Physical Coding Sublayer (PCS) module (405) maintains part of the functionality specified in [1], it however includes a number of modifications. Incoming characters arriving from the parallel interface (404) are encoded into 66-bit blocks via 64B/66B encoding (407) and then scrambled (408) as defined in [1]. However, before encoding and scrambling, all idle characters are removed (406). At this point it should be noted that according to [1], the RS will only place idle characters in between successive data frames. The remaining characters, now encoded in block formal are forwarded to a buffer named Non-Idle Block FIFO (409) in the figure. Buffer (409) operates in a FIFO fashion and on the basis of 66-bit blocks. The reason for the intermediate buffering is that a multi-lane scheme similar to the one used in [1] is assumed. In that respect, blocks created by the PCS are originally intended to be distributed to $n$ electrical lanes (412) in a round-robin fashion (411), the rate of each lane being $L_i/n$. In order to be able to produce an Etherbet signal of rate $R_{i,j} \leq L_i$, the proposed Flex-Ethernet scheme uses round-robin distribution but only among $a_{i,j}$ lanes which are considered as the "active" lanes, It should always hold that: $\sum_{j=1}^{k} \alpha_{i,j} \leq n$. The proposed scheme takes advantage of the existing idle characters and eliminates them, so that only useful blocks are presented to the $\alpha_{i,j}$ active lanes. At the same time, an additional Idle Block Insertion Module (410) ensures that whenever there are no blocks waiting in buffer (409), the round-robin distribution mechanism (411) will be fed with "idle blocks" (blocks comprising idle characters only). This is for example expected to take place when longer inter-frame gaps appear as a result of the actual traffic rate being lower than $R_{i,j}$. It should be noted that the idle blocks inserted by (410) should be provided in scrambled form.

As mentioned already, each of the Flex-Ethernet MAC/PCS Tx Modules (400) receives input at a rate of $L_i$ and outputs at rate $R_{i,j} \leq L_i$. It is therefore assumed that traffic destined for each VEL and handled by MAC/PCS Tx $(i,j)$ is already shaped at the client side to ensure that its average rate will not exceed $R_{ij}$ when averaged at a bust duration longer than $b$. Any shaping mechanism from the literature, like for instance the token bucket scheme, can be employed to achieve this result. The aforementioned shaping assumption ensures that the maximum required size for buffer (409) to ensure lossless operation is deterministic. In other words, enough idle characters are guaranteed to be received during the buffer duration timeframe to allow operation using a lower number of output PCS lanes.

Figure 4. The receiving part of the proposed Flex-Ethernet transponder architecture.

For the round-robin distribution (411), alignment markers are used in a similar fashion as described in [1], with the difference that depending on the number of active lanes, a smaller lane marker count (ranging from 0 to $\alpha_{i,j}$ - 1) is employed. The same lane marker range can be used by the different Flex-Ethernet PCS modules sharing the same line port., since the proposed Physical Medium Attachment (PMA) (600) ensures that the respective output lanes (412) of the PCS module (405) will be directed to separate input lanes of the PHY Module Tx (801). For example, the lanes shown in dashed lines (603) contain data originating only from Flex-Ethernet MAC/PCS Tx (1,1) (400). Finally, as shown in Figure 3, the PMA with Lane Multiplexing module (600) makes the appropriate cross-connections between sets of $p$ consecutive input interfaces (601) and the associated single output interfaces (603), via intermediate $p$: 1 bit multiplexers (602). The multiplexing ratio parameter $p$ is determined by the respective lane counts as $p = n/m$.

Figure 4 depicts the receiving part of the proposed Flex-Ethernet MAC/PCS (500). As shown in the figure, each of the active output lanes (703) of the PHY Module Rx (802) are bit-demultiplexed (702) by the PMA module (700) into $p$ bit streams which are then directed to $\alpha_{i,f}$ output interfaces (701), in turn leading to the appropriate active PMA output lanes (512). Lane reordering and deskewing (511) is performed, by the PCS as described in [1], but only among the lanes belonging to the same Flex-Ethernet MAC/PCS Rx. Incoming blocks are descrambled and decoded as described in [1] and the resulting characters are inserted in a buffer (509) with similar characteristics as described above for (409). Since blocks (501), (503) and interfaces (502), (504) operate at rate $L_i \geq R_{i,j}$, an Idle Character Insertion Module (508) is needed to insert idle characters for maintaining the rate of $L_i$ b/s. "Start" and "terminate" characters are identified by a Character Combiner Module (506), so that the inserted idle blocks are placed only between successive Ethernet frames, as required by the RS.

The resulting bit-serial output of rate $L_i$ is converted to parallel (504) for providing output to a fixed-rate RS Rx Module (503). This module in turn outputs using a bit-serial interface (502) at rate $L_i$ to a fixed-rate MAC Rx module (501) also operating at rate $L_i$. As described already, the corresponding frames are then forwarded to the client side by means of the Client Port mapper (210) and the corresponding bit-serial interfaces (207), both operating at rate $C_i$.

1b. - If possible, please provide a claim tree or diagram starting from a main claim showing progression from broadest inventive features to lower level detailed features that you think should be protected (patent counsel can assist, if needed).

1c. - What specific parts of the solution to the problem shown in 1a and 1b above are NEW and DIFFERENT from what is already known (prior art)? Explain flow or operation sequence or diagram blocks or steps and how problem is solved or advantage is achieved.

The proposed software-defined multiple input and multiple output Flexible Ethernet transponder architecture (200) (Figure 2), the Virtual. Ethernet Link mapping concept (211) (Figure 2) as well as the Flex-Ethernet transmitting (400), (600) (Figure 3) and receiving (500), (700) (Figure 4) methods are new and different from what is known in prior art. The detailed block diagrams explaining the operation of the proposed concepts are provided in the aforementioned figures.

1d. - Identify key/essential steps or features from 1a or 1b: i) that enable benefits/advantages over what is known and/or ii) that solve an important problem in the art.

The essential steps enabling benefits from prior art are 1) the mapping of a single client Ethernet signal to multiple parallel Virtual Ethernet Links (211), 2) the adjustment of the number of active electrical transmission lanes (412), 3) the idle character removal (406), 4) the use of an intermediate block buffer (409), 5) the idle block insertion (410), 6) the electrical lane multiplexing (600), 7) the electrical lane demultiplexing (700), 8) the use of an intermediate character buffer (507), 9) the idle character insertion (508) and 10) the control of the transponder parameters by a remote controller (100). By means of the aforementioned steps, the proposed architecture manages to achieve software-defined transmission of multiple flexible Ethernet signals in parallel single optical transceiver modules, thus facilitating achieving increased spectral and energy efficiency, cost savings and easier management.

2. - Prior Art. List patents, articles, or publications you believe are closest to steps/features in 1c/1d and/or provide a block diagram of what is known with respect to steps/features in 1c/1d,

[1] http://www.ieee802.org/3/ba/

[2] McKeown, Nick, et al. "OpenFlow: enabling innovation in campus networks." ACM SIGCOMM Computer Communication Review, 38.2 (2008): 69-74.

[3] Han, Kyeong-Eun, et al. "Adaptive Data Transmission Control for Multilane-Based Ethernet." ETRI Journal 35.1 (2013).

[4] Han, Kyeong-Eun, et al. "An Energy Saving Scheme for Multilane-Based High-Speed Ethernet." ETRI J 34.6 (2012): 807-815,

[5] Reviriego, P., et al. "Improving Energy Efficiency in IEEE 802.3 ba High-Rate Ethernet Optical Links." IEEE Journal of Selected Topics in Quantum Electronics, 17.2 (2011): 419-427.

[6] http://www.ieee802.org/3/az/

[7] Gunaratne, Chamara, et al. "Reducing the energy consumption of Ethernet with adaptive link rate (ALR)." IEEE Transactions on Computers, 57.4 (2008): 448-461.

[8] Wael Diab, Scott Powell (Broadcom Corporation), "Method and system for link adaptive Ethernet communications", US Patent Application 20110007664 A1.

[9] Gerstel, Ori, et al. "Elastic optical networking: a new dawn for the optical layer?." IEEE Communications Magazine, 50.2 (2012): s12-s20.

[10] T. Ohara, M. Teshima, S. Aisawa, and M. Jinno, "OTN Technology for Multi-flow Optical Transponder in Elastic 400G/1T Transmission Era," in Optical Fiber Communication Conference, OSA Technical Digest (Optical Society of America, 2012), paper JW2A.8.

[11] YONENAGA, Kazushige, et al. "MULTI-FLOW OPTICAL TRANSCEIVER, MULTI-FLOW OPTICAL TRANSPONDER AND MULTI-FLOW OPTICAL NODE." WIPO Patent No. 2013012015. 25 Jan. 2013.

[12] http://standards.ieee.org/findstds/standard/802.1AX-2008.html

## Claims

1. A method for data transport, comprising:

   receiving one or more signals into a reconfigurable and flexible rate shared rate multi-transponder network architecture, wherein the network architecture includes one or more transponders (100) with multiple line side interfaces and one or more client side interfaces, the one or more transponders configured to:

   map one or more signals to multiple parallel Virtual Ethernet Links;
   remove idle characters from the one or more signals;
   buffer one or more blocks of characters using an intermediate block buffer;
   activate and deactivate one or more portions of input/output electrical lanes of an Ethernet module processing one or more incoming Ethernet frame streams arriving at a transponder from client side interfaces and destined for the same output port i with maximum rate $L_i$ at a line side and split into up to *k* independent streams, and each is carried over a transmission pipe with a rate $R_{i,j}$, where it may hold that: $\sum_{j=1}^{k} R_{i,j} \leq L_i;$

multiplex and demultiplex the one or more signals to and from the input/output electrical lanes to enable sharing of a single optical transceiver by multiple independent signals, the multiple independent signals being multiplexed and demultiplexed in parallel according to actual traffic demands for each of the multiple independent signals; and

insert blocks of idle characters into the one or more signals to enable transmission over a lower rate transmission pipe.

2. The method as recited in claim 1, wherein the one or more signals are single client Ethernet signals.

3. The method as recited in claim 1, wherein only active lanes of the input/output electrical lanes are enabled.

4. The method as recited in claim 1, wherein the one or more transponders are further configured to map Ethernet frames arriving from the multiple line side interfaces to a configurable number of Ethernet signals of adjustable rate towards the one or more client side interfaces.

5. The method as recited in claim 1, wherein the one or more transponders is further configured to map Ethernet frames arriving from each of the one or more client side interfaces to a configurable number of Ethernet signals of adjustable rate towards the multiple line side interfaces.

6. The method as recited in claim 1, wherein parameters of the one or more transponders are controlled by a remote controller.

7. The method as recited in claim 1, wherein the one or more transponders are configured to insert idle characters into an Ethernet signal at the Physical Coding Sublayer to enable data transmission by higher rate sublayers.

8. A transmitter (200), comprising:
   one or more transponders in a reconfigurable and flexible rate shared rate multi-transponder network architecture, wherein the one or more transponders (100) include multiple line side interfaces and one or more client side interfaces, the one or more transponders further comprising:

   one or more mappers (110,114) configured to map one or more signals arriving from each of the one or more client side interfaces to a configurable number of adjustable rate Ethernet signals towards the multiple line side interfaces, wherein a single optical transceiver module is shared toward the multiple line side interfaces by multiple Ethernet signals in parallel, the multiple Ethernet signals each including traffic from a different client data stream where incoming Ethernet frame streams arrive at a transponder from client side interfaces and are destined for the same output port i with maximum rate Li at a line side and split into up to k independent streams, and each is carried over a transmission pipe with a rate $R_{i,j}$, where it may hold that: $\sum_{j=1}^{k} R_{i,j} \leq L_i;$
   one or more bit-serial interfaces (203) to receive input, and one or more parallel serial interfaces (205) to send output to one or more electrical lanes;
   an idle character removal module (206) configured to remove existing idle characters from the Ethernet signals, and to send only useful blocks to active lanes in the one or more electrical lanes, wherein the useful blocks are blocks with no idle characters;
   a buffer (212) configured to distribute blocks of data in a round robin fashion, the buffer including an idle block insertion module (214) configured to insert idle blocks when there are no blocks waiting in the buffer; and one or more scramblers (210) or encoders (208) configured to scramble or encode the one or more signals before transmitting.

9. The transmitter as recited in claim 8, wherein the one or more mappers are Virtual Ethernet Link mappers.

10. The transmitter as recited in claim 8, wherein the one or more signals are single client Ethernet signals.

**11.** The transmitter as recited in claim 8, wherein only active lanes of the one or more electrical lanes are enabled.

**12.** The transmitter as recited in claim 8, wherein the one or more transponders are further configured to map Ethernet frames arriving from each of the one or more client side interfaces to a configurable number of Ethernet signals of adjustable rate towards the multiple line side interfaces.

**13.** The transmitter as recited in claim 8, wherein parameters of the one or more transponders are controlled by a remote controller.

**14.** A receiver (300), comprising:
one or more transponders in a reconfigurable and flexible rate shared rate multi-transponder network architecture, wherein the one or more transponders (100) includes multiple line side interfaces and one or more client side interfaces, the one or more transponders further comprising:

a receiving module (320) configured to receive one or more signals using active lanes from one or more electrical lanes;
one or more demultiplexers (322) configured to demultiplex the one or more signals;
one or more descramblers (310) or decoders (308) configured to descramble or decode the one or more signals; and
a buffer (312) configured to receive descrambled or decoded signals, the buffer including a character insertion module (314) configured to insert characters between successive Ethernet frames to maintain a transport rate in parallel, the multiple Ethernet signals each including traffic from a different client data stream where incoming Ethernet frame streams arrive at a. transponder from client side interfaces and are destined for the same output port i with maximum rate Li at a line side and split into up to k independent streams, and each is carried over a transmission pipe with a rate Rij, where it may hold that: $\sum_{j=1}^{k} R_{i,j} \leq L_i.$

**15.** The receiver as recited in claim 14, wherein the one or more signals are single client Ethernet signals, or
wherein the one or more transponders is further configured to map Ethernet frames arriving from each of the one or more client side interfaces to a configurable number of Ethernet signals of adjustable rate towards the multiple line side interfaces, or
wherein parameters of the one or more transponders are controlled by a remote controller.

## Patentansprüche

**1.** Verfahren zum Datentransport, umfassend:
Empfangen eines oder mehrerer Signale in eine rekonfigurierbare Multi-Transponder-Netzwerkarchitektur mit gemeinsamer flexibler Rate, wobei die Netzwerkarchitektur einen oder mehrere Transponder (100) mit mehreren leitungsseitigen Schnittstellen und einer oder mehreren clientseitigen Schnittstellen beinhaltet, wobei der eine oder die mehreren Transponder konfiguriert sind um:

ein oder mehrere Signale auf mehrere parallele virtuelle Ethernet-Verbindungen abbilden;
Entfernen von ungenutzten Zeichen aus einem oder mehreren Signalen;
Pufferung eines oder mehrerer Zeichenblöcke unter Verwendung eines Zwischenblockpuffers;
Aktivieren und Deaktivieren eines oder mehrerer Abschnitte von elektrischen Ein-/Ausgangskanälen eines Ethernet-Moduls, das einen oder mehrere eingehende Ethernet-Frame-Streams verarbeitet, die von clientseitigen Schnittstellen zu einem Transponder gelangen
und für denselben Ausgangsport i mit maximaler Rate Li auf einer Leitungsseite bestimmt sind und in bis zu k unabhängige Streams aufgeteilt sind, nd jedes über eine Übertragungsleitung mit einer Rate $R_{i,j}$, übertragen wird, wobei gelten kann dass : $\sum_{j=1}^{k} R_{i,j} \leq L_i;$

Multiplexen und Demultiplexen der einen oder mehreren Signale zu und von den elektrischen Ein-/Ausgangskanälen, um die gemeinsame Nutzung eines einzelnen optischen Sende-Empfängers durch mehrere unabhängige Signale zu ermöglichen, wobei die mehreren unabhängigen Signale parallel gemäß den tatsächlichen Verkehrsanforderungen für jedes der mehreren unabhängigen Signale multiplexiert und demultiplexiert werden; und
Einfügen von Blöcken von Leerlaufzeichen in das eine oder die mehreren Signale, um die Übertragung über eine Übertragungsleitung mit niedrigerer Rate zu ermöglichen.

2. Verfahren nach Anspruch 1, worin das eine oder die mehreren Signale einzelne Client-Ethernet-Signale sind.

3. Verfahren nach Anspruch 1, wobei nur aktive Spuren der elektrischen Ein-/Ausgangskanäle aktiviert werden.

4. Verfahren nach Anspruch 1, worin der eine oder die mehreren Transponder ferner konfiguriert sind, um Ethernet-Frames abzubilden, die von den mehrleitungsseitigen Schnittstellen ankommen, auf eine konfigurierbare Anzahl von Ethernet-Signalen mit einstellbarer Rate zu den einen oder mehreren clientseitigen Schnittstellen.

5. Verfahren nach Anspruch 1, wobei der eine oder die mehreren Transponder ferner konfiguriert sind, um Ethernet-Frames, die von jeder der einen oder mehreren clientseitigen Schnittstellen ankommen, auf eine konfigurierbare Anzahl von Ethernet-Signalen mit einstellbarer Rate zu den mehrfachen leitungsseitigen Schnittstellen abzubilden.

6. Verfahren nach Anspruch 1, worin Parameter des einen oder der mehreren Transponder durch eine Fernsteuerung gesteuert werden.

7. Verfahren nach Anspruch 1, worin der eine oder die mehreren Transponder konfiguriert sind, um Leerzeichen in ein Ethernet-Signal an der Physical Coding Sublayer einzufügen, um die Datenübertragung durch Sublayer mit höherer Geschwindigkeit zu ermöglichen

8. Ein Sender (200), umfassend:
einen oder mehrere Transponder in einer rekonfigurierbaren Multi-Transponder-Netzwerkarchitektur mit gemeinsamer flexibler Rate, wobei der eine oder die mehreren Transponder (100) mehrere leitungsseitige Schnittstellen und eine oder mehrere clientseitige Schnittstellen beinhalten, wobei der eine oder die mehreren Transponder ferner umfassen:

einen oder mehrere Mapper (110, 114), die konfiguriert sind, um ein oder mehrere Signale, die von jeder der einen oder mehreren clientseitigen Schnittstellen kommen, auf eine konfigurierbare Anzahl von Ethernet-Signalen mit einstellbarer Rate in Richtung der mehrfachen leitungsseitigen Schnittstellen abzubilden, wobei ein einzelnes optisches Transceivermodul durch mehrere Ethernet-Signale parallel zu den mehrfachen leitungsseitigen Schnittstellen geteilt wird, wobei die mehrfachen Ethernet-Signale jeweils Verkehr aus einem unterschiedlichen Client-Datenstrom beinhalten, wobei eingehende Ethernet-Frame-Streams von den clientseitigen Schnittstellen zu einem Transponder gelangen und für denselben Ausgangsport i mit maximaler Rate Li auf einer Leitungsseite bestimmt sind und in bis zu k unabhängige Ströme aufgeteilt sind, und jedes über eine Übertragungsleitung mit einer Rate Ri,j übertragen eine oder mehrere bitserielle Schnittstellen (203) zum Empfangen von Eingaben und eine oder mehrere parallele serielle Schnittstellen (205) zum Senden von Ausgaben an eine oder mehrere elektrische Leitungen;
ein Leerzeichenlöschmodul (206), das konfiguriert ist, um vorhandene Leerzeichen aus den Ethernet-Signalen zu entfernen und nur nützliche Blöcke an aktive Spuren in der einen oder mehreren elektrischen Spuren zu senden, wobei die nützlichen Blöcke Blöcke ohne Leerzeichen sind;
einen Puffer (212), der konfiguriert ist, um Datenblocks in einer Round-Robin-Form zu verteilen, wobei der Puffer ein Leerlaufblockeinfügungsmodul (214) beinhaltet, das konfiguriert ist, um Leerlaufblöcke einzufügen, wenn keine Blöcke in dem Puffer warten; und
einen oder mehrere Verschlüsseler (210) oder Encoder (208), die konfiguriert sind, um das eine oder die mehreren Signale vor dem Senden zu verschlüsseln oder zu codieren.

9. Sender nach Anspruch 8, wobei der eine oder die mehreren Mapper Virtual Ethernet Link Mapper sind.

10. Sender nach Anspruch 8, worin das eine oder die mehreren Signale einzelne Client-Ethernet-Signale sind.

11. Sender nach Anspruch 8, wobei nur aktive Kanäle der einen oder mehreren elektrischen Kanäle aktiviert sind.

12. Sender nach Anspruch 8, wobei der eine oder die mehreren Transponder ferner konfiguriert sind, um Ethernet-Frames abzubilden, die von jeder der einen oder mehreren clientseitigen Schnittstellen ankommen, auf eine konfigurierbare Anzahl von Ethernet-Signalen mit einstellbarer Rate zu den mehrleitungsseitigen Schnittstellen.

**13.** Sender nach Anspruch 8, worin Parameter des einen oder der mehreren Transponder durch eine Fernbedienung gesteuert werden.

**14.** Empfänger (300), umfassend:

einen oder mehrere Transponder in einer rekonfigurierbaren Multi-Transponder-Netzwerkarchitektur mit gemeinsamer flexibler Rate, wobei der eine oder die mehreren Transponder (100) mehrere leitungsseitige Schnittstellen und eine oder mehrere clientseitige Schnittstellen beinhalten, wobei der eine oder die mehreren Transponder ferner umfassen:

ein Empfangsmodul (320), das konfiguriert ist, um ein oder mehrere Signale unter Verwendung aktiver Spuren von einer oder mehreren elektrischen Kanälen zu empfangen;
einen oder mehrere Demultiplexer (322), die zum Demultiplexen des einen oder der mehreren Signale konfiguriert sind;

einen oder mehrere Decrambler (310) oder Decoder (308), die konfiguriert sind, um das eine oder die mehreren Signale zu entschlüsseln oder zu decodieren; und
einen Puffer (312), der konfiguriert ist, um entschlüsselte oder decodierte Signale zu empfangen, wobei der Puffer ein Zeicheneinfügungsmodul (314) beinhaltet, das konfiguriert ist, um Zeichen zwischen aufeinanderfolgenden Ethernet-Frames einzufügen, um eine Transportrate parallel aufrechtzuerhalten, wobei die mehreren Ethernet-Signale jeweils Verkehr aus einem anderen Client-Datenstrom beinhalten, wobei eingehende Ethernet-Frame-Streams von den Client-seitigen Schnittstellen zu einem Transponder gelangen und für denselben Ausgangsport i mit maximaler Rate Li auf einer Leitungsseite bestimmt sind und in bis zu k unabhängige Streams aufgeteilt sind, und jeder über eine Übertragungsleitung mit einer Rate Ri,j übertragen wird, wo er dies halten kann: $\sum_{j=1}^{k} R_{i,j} \leq L_i.$

**15.** Empfänger nach Anspruch 14, worin das eine oder die mehreren Signale einzelne Client-Ethernet-Signale sind, oder wobei der eine oder die mehreren Transponder ferner konfiguriert sind, um Ethernet-Frames, die von jeder der einen oder mehreren clientseitigen Schnittstellen ankommen, auf eine konfigurierbare Anzahl von Ethernet-Signalen mit einstellbarer Rate zu den mehrleitungsseitigen Schnittstellen abzubilden, oder wobei Parameter des einen oder der mehreren Transponder durch eine Fernsteuerung gesteuert werden.

**Revendications**

**1.** Un procédé de transport de données, comprenant :

le fait de recevoir un ou plusieurs signaux dans une architecture de réseau multi-répéteurs à débit partagé, reconfigurable et flexible, l'architecture de réseau comprenant un ou plusieurs transpondeurs (100) avec une pluralité d'interfaces côté ligne et une pluralité d'interfaces côté client, lesdits un ou plusieurs transpondeurs étant configurés pour :

le fait de mapper un ou plusieurs signaux en plusieurs Liens Ethernet Virtuels (*Virtual Ethernet Links*) parallèles ;
le fait de supprimer les caractères inactifs desdits un ou plusieurs signaux ;
le fait de mettre en mémoire tampon un ou plusieurs blocs de caractères à l'aide d'un tampon de blocs intermédiaire ;
le fait de activer et désactiver une ou plusieurs portions de voies électriques d'entrée/sortie d'un module Ethernet traitant un ou plusieurs flux de trames Ethernet entrants arrivant au niveau d'un transpondeur depuis des interfaces côté client et destinés au même port de sortie i avec un débit maximal Li côté ligne et répartis jusqu'à *k* flux indépendants, et chacun est transporté sur une conduite de transmission avec un débit R$_{ij}$, ce dont il peut être soutenu que : $\sum_{j=1}^{k} R_{i,j} \leq L_i$ ;

le fait de multiplexer et de démultiplexer lesdits un ou plusieurs signaux à destination et en provenance des voies électriques d'entrée/sortie pour permettre le partage d'un émetteur-récepteur optique unique par plusieurs signaux indépendants, les signaux indépendants multiples étant multiplexés et démultiplexés en parallèle en fonction des demandes de trafic effectives pour chacun des signaux indépendants multiples ; et
le fait d'insérer des blocs de caractères inactifs dans lesdits un ou plusieurs signaux pour permettre une transmission sur une conduite de transmission à faible débit.

2. Le procédé selon la revendication 1, dans lequel lesdits un ou plusieurs signaux sont des signaux Ethernet pour client unique.

3. Le procédé selon la revendication 1, dans lequel seules des voies actives des voies électriques d'entrée/sortie sont activées.

4. Le procédé selon la revendication 1, dans lequel lesdits un ou plusieurs transpondeurs sont en outre configurés pour mapper des trames Ethernet arrivant des interfaces multiples côté ligne en un nombre configurable de signaux Ethernet à vitesse réglable vers lesdites une ou plusieurs interfaces côté client.

5. Le procédé selon la revendication 1, dans lequel lesdits un ou plusieurs transpondeurs sont en outre configurés pour mapper des trames Ethernet arrivant depuis chacune des interfaces côté client en un nombre configurable de signaux Ethernet à vitesse réglable vers les interfaces multiples côté ligne.

6. Le procédé selon la revendication 1, dans lequel les paramètres desdits un ou plusieurs transpondeurs sont commandés par une télécommande.

7. Le procédé selon la revendication 1, dans lequel lesdits un ou plusieurs transpondeurs sont configurés pour insérer des caractères inactifs dans un signal Ethernet au niveau de la sous-couche de codage physique (*Physical Coding Sublayer*) afin de permettre la transmission de données par des sous-couches à débit supérieur.

8. Un émetteur (200), comprenant :
un ou plusieurs transpondeurs présents dans une architecture de réseau à transpondeurs multiples à débit partagé, reconfigurable et flexible, dans laquelle lesdits un ou plusieurs transpondeurs (100) comprennent plusieurs interfaces côté ligne et une ou plusieurs interfaces côté client, lesdits un ou plusieurs transpondeurs comprenant en outre :

un ou plusieurs mappeurs (110, 114) configurés pour mapper un ou plusieurs signaux arrivant depuis chacune desdites une ou plusieurs interfaces côté client en un nombre configurable de signaux Ethernet à vitesse réglable vers les interfaces multiples côté ligne, un unique module émetteur-récepteur optique étant partagé vers les interfaces multiples côté ligne par plusieurs signaux Ethernet en parallèle, les multiples signaux Ethernet comprenant chacun du trafic provenant d'un flux de données client différent, les flux de trames Ethernet entrants arrivant à un transpondeur à partir d'interfaces côté client et étant destinés au même port de sortie i ayant un débit maximal Li côté ligne et étant divisés en k flux indépendants, et chacun étant transporté sur une conduite de transmission avec un débit R$_{ij}$, ce dont il peut être soutenu que : $\sum_{j=1}^{k} R_{i,j} \leq L_i$ ;

lesdites une ou plusieurs interfaces série (203) pour recevoir l'entrée, et une ou plusieurs interfaces série parallèles (205) pour envoyer une sortie à une ou plusieurs voies électriques ;
un module (206) de suppression de caractères inactifs configuré pour supprimer les caractères inactifs existants des signaux Ethernet, et pour envoyer uniquement des blocs utiles aux voies actives dans lesdites une ou plusieurs voies électriques, les blocs utiles étant de blocs sans caractères inactifs ;
une mémoire tampon (212) configurée pour distribuer des blocs de données en mode round robin, la mémoire tampon incluant un module (214) d'insertion de blocs inactifs configuré pour insérer des blocs inactifs lorsqu'il n'y a pas de blocs en attente dans la mémoire tampon ; et
un ou plusieurs brouilleurs (210) ou codeurs (208) configurés pour brouiller ou coder lesdits un ou plusieurs signaux avant leur transmission.

9. L'émetteur selon la revendication 8, dans lequel lesdits un ou plusieurs mappeurs sont des mappeurs de liaison Ethernet virtuelle.

10. L'émetteur selon la revendication 8, dans lequel lesdits un ou plusieurs signaux sont des signaux Ethernet pour client unique.

11. L'émetteur selon la revendication 8, dans lequel seules des voies actives desdites une ou plusieurs voies électriques sont activées.

**12.** L'émetteur selon la revendication 8, dans lequel lesdits un ou plusieurs transpondeurs sont en outre configurés pour mapper des trames Ethernet arrivant de chacune desdites une ou plusieurs interfaces côté client en un nombre configurable de signaux Ethernet à vitesse réglable vers les interfaces multiples côté ligne.

**13.** L'émetteur selon la revendication 8, dans lequel les paramètres d'un ou plusieurs transpondeurs sont commandés par une commande à distance.

**14.** Un récepteur (300), comprenant :
un ou plusieurs transpondeurs dans une architecture de réseau multi-transpondeur à débit partagé, reconfigurable et flexible, dans laquelle lesdits un ou plusieurs transpondeurs (100) comprennent de multiples interfaces côté ligne et une ou plusieurs interfaces côté client, lesdits un ou plusieurs transpondeurs comprenant en outre :

un module de réception (320) configuré pour recevoir un ou plusieurs signaux en utilisant des voies actives parmi une ou plusieurs voies électriques ;
un ou plusieurs démultiplexeurs (322) configurés pour démultiplexer lesdits un ou plusieurs signaux ;
un ou plusieurs dé-brouilleurs (310) ou décodeurs (308) configurés pour dé-brouiller ou décoder lesdits un ou plusieurs signaux ; et
une mémoire tampon (312) configurée pour recevoir des signaux dé-brouillés ou décodés, la mémoire tampon (314) comprenant un module (314) d'insertion de caractères configuré pour insérer des caractères entre des trames Ethernet successives afin de maintenir une vitesse de transport en parallèle, les signaux Ethernet multiples comprenant chacun un trafic provenant d'un flux de données client différent, des flux de trame Ethernet entrants arrivant à un transpondeur depuis des interfaces côté client et étant destinés au même port de sortie i avec un débit maximum Li côté ligne et étant séparés en k flux indépendants, et chacun étant porté sur une conduite de transmission avec un débit Rij ce dont il peut être soutenu que : $\sum_{j=1}^{k} R_{i,j} \leq L_i$ .

**15.** Le récepteur selon la revendication 14, dans lequel lesdits un ou plusieurs signaux sont des signaux Ethernet pour client unique, ou
dans lequel lesdits un ou plusieurs transpondeurs sont en outre configurés pour mapper des trames Ethernet provenant de chacune desdites une ou plusieurs interfaces côté client en un nombre configurable de signaux Ethernet à vitesse réglable vers les interfaces multiples côté ligne, ou
dans lequel des paramètres desdits un ou plusieurs transpondeurs sont commandés par une télécommande.

FIG. 1

FIG. 2

EP 3 036 869 B1

FIG. 3

EP 3 036 869 B1

FIG. 4

Receiving signal as input
500

Mapping single client Ethernet signal to multiple
parallel Virtual Ethernet Links
502

Adjusting active electrical transmission lanes
504

Removing idle characters
506

Buffering using an intermediate block buffer
508

Performing block insertion
510

Performing electrical lane multiplexing
512

Outputting multiple flexible Ethernet signals in
parallel single optical transceiver modules
514

Performing electrical lane demultiplexing
516

Inserting Idle Characters
518

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2012155486 A1
- US 20110007664 A1
- WO 2013012015 A

### Non-patent literature cited in the description

- **MCKEOWN ; NICK et al.** OpenFlow: enabling innovation in campus networks. *ACM SIGCOMM Computer Communication Review,* 2008, vol. 38.2, 69-74
- **HAN ; KYEONG-EUN et al.** Adaptive Data Transmission Control for Multilane-Based Ethernet. *ETRI Journal,* 2013, vol. 35.1
- **HAN ; KYEONG-EUN et al.** An Energy Saving Scheme for Multilane-Based High-Speed Ethernet. *ETRI J,* 2012, vol. 34.6, 807-815
- **REVIRIEGO, P. et al.** Improving Energy Efficiency in IEEE 802.3 ba High-Rate Ethernet Optical Links. *IEEE Journal of Selected Topics in Quantum Electronics,* 2011, vol. 17.2, 419-427
- **GUNARATNE ; CHAMARA et al.** Reducing the energy consumption of Ethernet with adaptive link rate (ALR). *IEEE Transactions on Computers,* 2008, vol. 57.4, 448-461
- **WAEL DIAB ; SCOTT POWELL.** Method and system for link adaptive Ethernet communications. Broadcom Corporation
- **GERSTEL ; ORI et al.** Elastic optical networking: a new dawn for the optical layer?. *IEEE Communications Magazine,* 2012, vol. 50.2, 12-20
- OTN Technology for Multi-flow Optical Transponder in Elastic 400G/1T Transmission Era. **T. OHARA ; M. TESHIMA ; S. AISAWA ; M. JINNO.** Optical Fiber Communication Conference. Optical Society of America, 2012
- **YONENAGA ; KAZUSHIGE et al.** MULTI-FLOW OPTICAL TRANSCEIVER, MULTI-FLOW OPTICAL TRANSPONDER AND MULTI-FLOW OPTICAL NODE. *WIPO*